**Europäisches Patentamt**

**European Patent Office**

**Office européen des brevets**

(19)

(11) Publication number: **0 051 049**

**A1**

(12) # EUROPEAN PATENT APPLICATION

(21) Application number: **81830209.3**

(22) Date of filing: **28.10.81**

(51) Int. Cl.³: **A 61 C 13/30**

(30) Priority: **29.10.80 IT 5362280 U**

(43) Date of publication of application:
**05.05.82 Bulletin 82/18**

(84) Designated Contracting States:
**AT BE CH DE FR GB IT LI LU NL SE**

(71) Applicant: **Venturini, Daniele**
**Via San Rocco 28**
**I-14018 Villafranca d'Asti (Asti)(IT)**

(72) Inventor: **Venturini, Daniele**
**Via San Rocco 28**
**I-14018 Villafranca d'Asti (Asti)(IT)**

(74) Representative: **Jacobacci, Filippo et al,**
**c/o Jacobacci-CASETTA & PERANI S.p.A. Via Alfieri 17**
**I-10121 Torino(IT)**

(54) **Root pin for anchoring a dental prosthesis.**

(57) A root pin (1) for anchoring a dental prosthesis has a conical body (2) with a flattened end portion (3) located at the greater diameter end of the conical body (2). The conical body (2) is intended to be inserted in the root canal of a tooth lacking its crown with its flattened end portion (3) projecting outwardly of the root of the tooth.

The root pin (1) is formed from stainless steel and the said flattened end portion (3) is covered with a coating (8) of noble metal.

FIG. 2

EP 0 051 049 A1

- 1 -

"Root pin for anchoring a dental prosthesis"

The present invention relates to a root pin for anchoring a dental prosthesis, having a conical body with a flattened end portion located at the larger diameter end of the conical body and intended to be inserted in the root canal of a tooth which lacks its crown, with its flattened end portion projecting outwardly from the root of the tooth so as to serve for the reconstruction of the crown itself and for anchoring the dental prosthesis.

Root pins of the type specified above are usually made from noble alloys, based on gold, palladium, or platinum, or from stainless steel.

By using a root pin made from noble metal it is possible to bond the pin directly and easily, by means of welding or superfusion, to any type of dental prosthesis. Moreover, root pins of this type have a high resistance to the forces to which the pin is subject during mastication.

The main disadvantage of root pins made from noble metal lies in their high cost.

Stainless steel root pins are naturally more economical than noble metal pins; but, compared with the latter, have the disadvantage of not allowing direct bonding with the dental prosthesis constituted of noble metal. In fact, when this type of root pin is used it is necessary to solder to the root pin a layer of soldering alloy which can be bonded in its turn by soldering to the dental prosthesis.

The object of the present invention is to obviate the disadvantage mentioned above.

In order to achieve this object, the present invention has as its subject a root pin of the type specified at the beginning, characterised in that it is composed of stainless steel and in that the said flattened end portion of the root pin is covered with a coating of noble metal, preferably gold.

- 2 -

Further characteristics and advantages of the root pin according to the invention will emerge from the following description with reference to the appended drawings, provided purely by way of non-limiting example, in which:

Figures 1 and 2 are two side views, the second of which is partially sectioned, of the root pin according to the present invention, and

Figure 3 is a sectional view of a tooth provided with the root pin according to the present invention.

In the drawings, a root pin is generally indicated by 1, the body of which has a conical portion 2 and a flattened end portion 3 located at the greater diameter end of the conical portion 2.

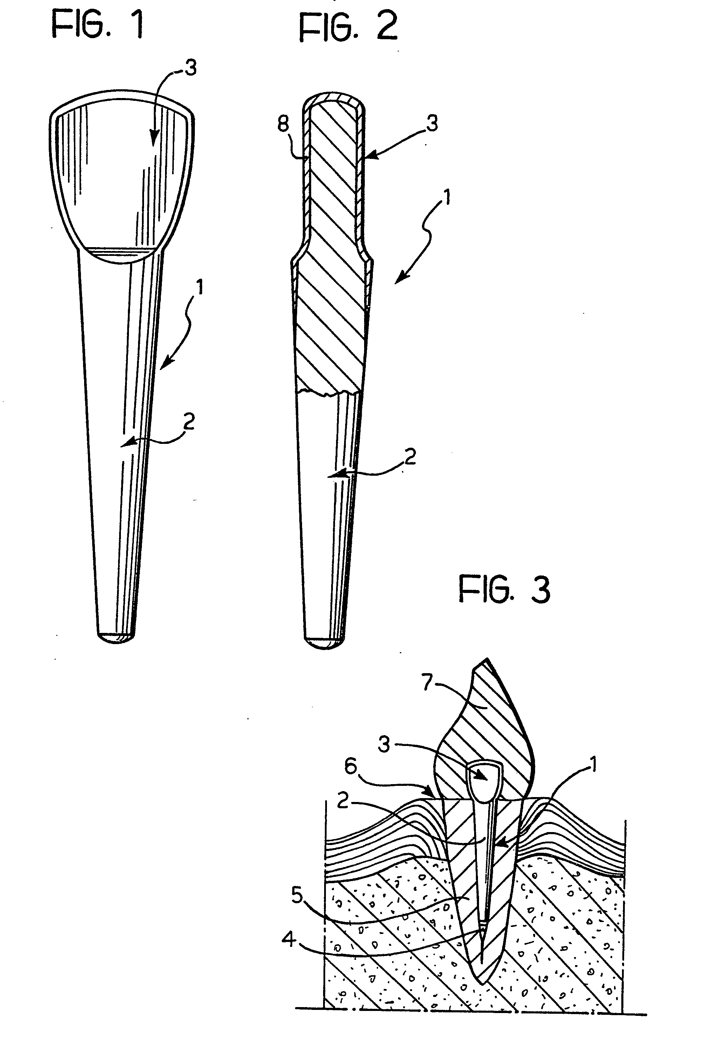

With reference to Figure 3, the root pin 1 is intended to be inserted in the root canal 4 of the root 5 of a tooth 6 lacking its crown. The root pin 1 is inserted in the root canal 4 so as to have its flattened end portion 3 projecting outwardly from the root 5. In this manner a dental prosthesis 7 may be anchored to the portion 3 of the root pin 1.

According to the present invention, the root pin 1 is composed of steel and the flattened end portion 3 is covered with a coating 8 of gold or other noble metal.

Thanks to the said characteristic, the root pin according to the invention is relatively inexpensive and at the same time retains the advantages of root pins composed of noble metal of strength and adaptibility for connection to prostheses of any type. The coating 8 of gold in fact allows the direct fixing of the prosthesis 7 to the flattened end portion 3 by welding or superfusion, whatever the constituent material of the prosthesis (for example alloys of nickel, chromium or noble alloys).

Naturally, the effect of the present invention also extends to other models which achieve equal utility by using the same innovative concept.

- 3 -

CLAIMS

1. A root pin for anchoring a dental prosthesis, having a conical body (2) with a flattened end portion (3) located at the greater diameter end of the conical body (2) and intended to be inserted in the root canal (4) of a tooth (6) lacking its crown with its flattened end portion (3) projecting from the end of the root (5) of the tooth (6) so as to serve for the reconstruction of the crown itself and for anchoring the dental prosthesis,

characterised in that the said root pin (1) is made from stainless steel and in that the said flattened end portion (3) is covered with a coating (8) of noble metal.

2. A root pin according to Claim 1, characterised in that the said coating which covers the flattened end portion (3) of the root pin (1) is of gold.

0051049

1/1

FIG. 1

FIG. 2

FIG. 3

# EUROPEAN SEARCH REPORT

European Patent
Office

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | | | |
| | AT - B - 138 885 (ZIEGS) <br> * claim * <br> -- | 1,2 | A 61 C 13/30 |
| | DE - C - 718 062 (BÖGER) <br> * page 2, lines 3 to 23 * <br> -- | 1 | |
| | AT - B - 135 190 (TREBITSCH) <br> * claims 1,2 * <br> -- | 1 | **TECHNICAL FIELDS SEARCHED (Int. Cl.³)** |
| | AT - B - 181 016 (FRICO GMBH GOLD- UND SILBER-SCHEIDE-ANSTALT) <br> * page 1, line 82 to page 2, line 10; <br> fig. 2,3 * <br> -- | 1 | A 61 C 5/00 <br> A 61 C 13/00 |
| | CH - A - 370.191 (STUTZ) <br> * claim 4 * <br> -- | 1 | |
| A | US - A - 1 397 067 (WILLIAMS) <br> * page 1, line 106 to page 2, line 8 * <br> ---- | 1 | |

The present search report has been drawn up for all claims

| Place of search | Date of completion of the search | Examiner |
|---|---|---|
| Berlin | 12-01-1982 | SIMON |

EPO Form 1503.1   06.78